(19) Europäisches Patentamt
European Patent Office
Office européen des brevets

(11) EP 0 563 926 B1

(12) # EUROPEAN PATENT SPECIFICATION

(45) Date of publication and mention of the grant of the patent: **23.07.1997 Bulletin 1997/30**

(51) Int. Cl.[6]: **C02F 1/78**

(21) Application number: **93105348.2**

(22) Date of filing: **31.03.1993**

(54) **Water treatment process with ozone**

Wasserbehandlung durch Ozon

Procédé de traitement de l'eau par de l'ozone

(84) Designated Contracting States:
**BE CH DE FR GB LI NL**

(30) Priority: **01.04.1992 JP 78083/92**
**21.10.1992 JP 282093/92**

(43) Date of publication of application:
**06.10.1993 Bulletin 1993/40**

(73) Proprietor: **FUJI ELECTRIC CO., LTD.**
**Kawasaki-shi Kanagawa 210 (JP)**

(72) Inventors:
- **Moniwa, Takeo**
**Machida-shi, Tokyo (JP)**
- **Okada, Mitsumasa**
**Inashiki-gun, Ibaraki (JP)**
- **Motoyama, Nobuyuki,**
**c/o Fuji Electric Co., Ltd.**
**Kawasaki-shi, Kanagawa (JP)**
- **Morioka, Takayuki,**
**c/o Fuji Electric Co., Ltd.**
**Kawasaki-shi, Kanagawa (JP)**
- **Shimizu, Yasuji,**
**c/o Fuji Electric Co., Ltd.**
**Kawasaki-shi, Kanagawa (JP)**
- **Takahashi, Ryutaro,**
**c/o Fuji Electric Co., Ltd.**
**Kawasaki-shi, Kanagawa (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A- 4 105 545**
**US-A- 4 997 571**
**US-A- 5 120 453**

- **DATABASE WPIL Section Ch, Week 8913, Derwent Publications Ltd., London, GB; Class D15, AN 89-096173**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 563 926 B1

## Description

The invention relates to a method of treating water by injecting a metal chelate compound and then diffusing ozone therein.

With the rapidly growing public interest in water, various water treatment processes have been examined. The purposes of these processes include obtaining safe and good-tasting water in the area of commercial drinking water and high clarity water from the recycling of sewage. In the case of commercial drinking water or service water, tap water sometimes generates musty odors caused by the eutrophication of rivers and lakes used as the source of the water supply. This problem is caused by so-called "musty odor substances" such as geosmin, dimethylisoborneol (to be referred to as "2-MIB" hereinafter) and the like which are produced by blue-green algae and generate musty odors when in extremely low minimum concentrations in the range of about 5 to 20 ng/l.

Although adsorption treatment with active carbon is carried out at most of the purification plants as a countermeasure to solve this problem, such a treatment is costly because of the need for increased amounts of active carbon and complex handling requirements. As an alternative to active carbon processes, advanced treatment methods such as ozone treatment, biological water treatment, for example, have been examined.

US-A-4,105,505 relates to a process for removing cyanide-containing components from aqueous media, wherein a cationic surfactant is added to cyanide containing aqueous media to form a complex. Then, air or gas bubbles are brought into contact with the complex to form a foam in order to float the complex followed by filtration, extraction and oxidation to separate the cyanide. After having removed the cationic surfactant and the main part of the cyanide from said aqueous medium, the remaining aqueous medium is introduced in a conventional ozone contacter wherein the residual cyanide is oxidized.

In the case of sewage treatment, advanced treatment methods such as ozone treatments, membrane treatment for example, have been examined both from a load-reduction viewpoint at the purification plant and an environmental viewpoint. Potential uses for purified sewer water include as wash water for use in cars, for example, and as scenery water, for example as moat water.

Under such circumstances, water treatment with ozone is regarded as an effective means for overcoming the aforementioned problems. The water treatment with ozone has the advantages of being stable and being easily controlled by electric means. This water treatment process, however, has problems of increased treatment cost due to the need for additional facilities and requiring sufficient space for the construction of a large reaction tank. As a consequence, when opting to use this process for water treatment, a purification plant will be confronted with serious problems of large construction costs and significant space requirements for the construction. Because of these problems, various modifications of the conventioal ozone process have been proposed in order to materially reduce the size of the reaction tank, i.e., to improve efficiency of the reaction.

It is known that the oxidation reaction by ozone in water comprises the direct reaction of the ozone molecule and the indirect reactions of hydroxy radicals (OH•) and hydroperoxy radicals ($HO_2$•) which are formed by the self-decomposition of ozone. Since hydroxy radicals have stronger oxidation activity than ozone, efficiency of the water treatment with ozone can be improved by increasing quantity of the hydroxy radicals present. Such an improvement may be attained for example by:

(1) increasing the pH value of water to be treated,
(2) adding $H_2O_2$ to the water to be treated,
(3) irradiating the water to be treated with UV rays,
(4) irradiating the water to be treated with radiation,
(5) irradiating the water to be treated with ultrasonic energy, or
(6) employing a catalyst such as a metal ion or a metal oxide.

As an example of the above technique (6), a process has been disclosed in unexamined published Japanese patent application JP-A-59-186695 in which treatment efficiency of waste water that contains organic reducing materials is improved by the formation of chelate compounds effected by the addition of a metal ion such as of iron, manganese, cobalt or the like. According to the disclosed process, the electron density of the organic reducing materials is increased by converting the materials into chelate compounds to accelerate their reaction with ozone molecules and OH radicals which have high electrophilic reactivities.

The aforementioned techniques (1) to (6) for use in the acceleration of hydroxy radical (OH•) formation are effective in terms of improved reaction efficiency, but have the attendant disadvantage of large cost. The aforementioned metal ion addition process disclosed in JP-A-59-186695 has the added disadvantages of being a process that is effective only for the treatment of waste water which contains organic reducing materials and requires adjustment of the pH value of the waste water to 3 or below. In addition, when a large volume of water such as service water or sewage is treated by this catalytic process, it is necessary to increase the quantity of chemicals added to correspond to the waste water volume. This addition entails increased cost and the extension of facilities, thereby reducing the effectiveness of

the process.

The present invention has been made in view of the above circumstances, and has as an object to provide a process of water treatment with ozone in which the formation of a hydroxy radical (OH•) having a high oxidation activity is accelerated by the addition of a metal chelate compound, thereby effecting efficient decomposition of trace amounts of organic substances.

A further object of the invention is to provide a process for the treatment of water with ozone in which trace amounts of organic substances contained in water to be treated are oxidized and decomposed by diffusing ozone into the water to be treated which is introduced in a reaction tank, wherein a chelate compound is injected into the water to be treated.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

To achieve the objects the present invention provides a process for treating water containing trace amounts of organic substances with ozone, comprising the steps of

- adding a metal chelate compound to said water;
- diffusing ozone into said water, and
- oxidizing and decomposing said organic substances in the presence of the chelate compound and ozone.

The accompanying drawings, which are incorporated in and constituted a part of this specification illustrate embodiments of the invention and together with the description, serve to explain the objects, advantages and principles of the invention.

Fig. 1 is a schematic drawing showing a radical chain reaction in the presence of a coexisting substance.

Fig. 2 is a schematic drawing showing an experimental apparatus used in the preferred embodiment of the present invention.

Fig. 3 is a diagram showing the relationship between EDTA complex concentration and the relative rate constant of reaction in the case of 2-MIB.

Fig. 4 is a diagram showing the relationship between EDTA complex concentration and the relative rate constant of reaction in the case of geosmin.

Fig. 5 is a diagram showing the relationship between EDTA-Na complex concentration and the relative rate constant of reaction in the case of geosmin.

Fig. 6 is a diagram showing the relationship between EDTA complex concentration and the relative rate constant of reaction in the case of 2-MIB and geosmin.

In Figs. 3 to 6, - ○ - is a line for EDTA-Na, - □ - for EDTA-Ca, - △ - for EDTA-Mg and - ◊ - for EDTA-Fe.

Fig. 7 is a diagram showing the relationship between iron citrate concentration and the relative rate constant of reaction in the case of 2-MIB and geosmin. In Fig. 7, in which - ○ - is a line for 2-MIB and - □ - for geosmin.

In accordance with the process of the present invention, a chelate compound is injected into water to be treated after or just before the introduction of the water into a reaction tank, and then the water treatment is carried out by diffusing ozone into the reaction tank.

The process of the present invention can be applied for treating water which contains trace amounts of organic substances such as geosmin, 2-MIB, phenol, cyanide, dyestuffs, etc.

The process of the present invention is performed preferably within the pH of 5 to 10 at 1 to 40°C.

The metal chelate compound of the present invention can be added in the concentration of $10^{-7}$ to $10^{-4}$ mol/l based on the concentration of the organic substances of $10^{-9}$ to 1 g/l.

The chelating agent of the chelate compound can be ethylenediaminetetraacetic acid, citric acid, for example.

The metal ion of the chelate compound can be selected from the group consisting of sodium, calcium, magnesium and iron.

Preferred chelate compounds are selected from the group consisting of ethylenediaminetetraacetic acid disodium salt, ethylenediaminetetraacetic acid calcium salt, ethylenediaminetetraacetic acid magnesium salt, ethylenediaminetetraacetic acid iron salt and iron citrate.

Preferred ozone introduction ratio (concentration of ozone gas × flow rate of gas × introduction time ÷ volume of water to be treated) is 0.1 to 100 mg/l.

The process of the present invention is based on the highly efficient formation of hydroxy radicals (OH•) whose oxidation activity is higher than that of ozone. In other words, trace amounts of organic substances are decomposed efficiently by hydroxy radicals (OH•) which are formed efficiently through a chain reaction that comprises a hydroxy radical formation reaction by a metal chelate compound and ozone and a hydroperoxy radical ($HO_2$•) formation reaction by a metal chelate compound and hydroxy radical (OH•).

The following describes the self-decomposition reaction of ozone. In purified water, a hydroxy radical (OH•) is formed by the following self-decomposition reaction of ozone.

$$O_3 + H_2O \rightarrow HO_3^+ + OH^-$$

$$HO_3^+ + OH^- \rightarrow 2HO_2\bullet$$

$$O_3 + HO_2\bullet \rightarrow OH\bullet + 2O_2$$

By contrast, when water contains a coexisting substance, hydroxy radical (OH•) is formed according to the radical chain reaction model shown in Fig. 1 and the following radical chain reaction formulae (i) to (ix) which are also encompassed in the reaction model of Fig. 1. In these formulae, X is a coexisting substance, e.g., a metal chelate compound, and A is a trace amount of an organic substance to be removed.

$$O_3\ (gas) \rightarrow O_3\ (Liquid) \qquad (i)$$

$$X + O_3 \rightarrow products \qquad (ii)$$

$$X + O_3 \rightarrow OH\bullet + products \qquad (iii)$$

$$O_3 + OH^- \rightarrow \bullet O_2^- + HO_2\bullet \qquad (iv)$$

$$HO_2\bullet \rightarrow H\bullet + \bullet O_2^- \qquad (v)$$

$$O_3 + \bullet O_2^- + H_2O \rightarrow OH\bullet + OH^- + 2O_2 \qquad (vi)$$

$$X + OH\bullet \rightarrow HO_2\bullet + products \qquad (vii)$$

$$X + OH\bullet \rightarrow products \qquad (viii)$$

$$OH\bullet + A \rightarrow products \qquad (ix)$$

In the above reaction formulae (i) to (ix), hydroxy radical (OH•) is formed by the reaction of a chelate compound X with dissolved ozone $O_3$ represented by the reaction formula (iii) and by the reactions of (v) and (vi) originated from hydroperoxy radical ($HO_2$•) formed by the reaction of a chelate compound X with hydroxy radical (OH•) represented by the reaction formula (vii). Therefore, according to the water treatment process of the present invention, decomposition of trace amounts of organic substances is carried out efficiently based on the addition of a metal chelate compound which accelerates formation of the high oxidation activity hydroxy radical (OH•).

The following examples are provided to further illustrate the process of the present invention. The examples illustrate the removal of musty odor substances (2-MIB and geosmin) that cause problems in the area of commercial service water. It is to be understood, however, that the examples are for purpose of illustration only and are not to be construed as limiting.

## EXAMPLES

An experimental apparatus used in the tests of the process of the present invention is shown in the partial schematic drawing, Fig. 2. In the figure, a cover-equipped cylindrical reaction tank 1 has a height of about 70 cm and an inside diameter of about 20 cm, thus having an effective capacity of 20 liters. The reaction tank 1 is equipped with a baffle plate 2 on its inner wall. The tank has a double wall structure into which water is circulated from an externally arranged constant-temperature water bath 3 through a pump 4 to control the inside temperature of the reaction tank and maintain it at about 20°C. Ozonized air generated from an ozone generator 5 is passed through a glass ball diffuser

7 via a flow meter 6 and diffused uniformly into the reaction tank 1 while the water being heated is stirred by an agitation motor 8 and an agitation impeller 9. Excess ozone gas which remains after the reaction, is introduced into an exhaust ozone decomposition column 10 and decomposed into oxygen. Concentration of ozone gas is measured by an ozone densitometer 11, and test samples are collected through a sampling outlet 12.

EXAMPLE 1

Water treatment tests were carried out in the following manner using the described experimental apparatus. First, an appropriate volume of phosphate buffer adjusted to a pH of 7 using potassium dihydrogenphosphate and disodium hydrogenphosphate was put in the reaction tank 1. To this was added a standard solution of a commercial preparation of 2-MIB (2-Methylisoborneol Standard manufactured by WAKO PURE CHEMICAL INDUSTRIES, LTD.) dissolved in purified water to an initial concentration of approximately 300 ng/l, followed by the addition of an EDTA complex within the concentration range of $10^{-7}$ to $10^{-4}$ mol/l. Four EDTA complexes were compared including ethylenediaminetetraacetic acid disodium salt (EDTA-2Na), ethylenediaminetetraacetic acid calcium salt (EDTA-Ca), ethylenediaminetetraacetic acid magnesium salt (EDTA-Mg) and ethylenediaminetetraacetic acid iron salt (EDTA-Fe).

The contents in the reaction tank 1 were adjusted to a predetermined temperature by the circulation of water from the constant-temperature water bath 3 and then mixed uniformly by the agitation motor 8 and the agitation impeller 9. Thereafter, ozonized air having a concentration of about 1.7 g/$Nm^3$ generated from the ozone generator 5 was introduced into the reaction tank 1 at a flow rate of 15 l/min. Each test was carried out at a constant ozone introduction ratio (concentration of ozone gas × flow rate of gas × introduction time ÷ volume of water to be treated). The effects of the addition of the EDTA complexes on the decomposition of 2-MIB are shown in Fig. 3.

In Fig. 3, the concentration of EDTA complex is plotted as the abscissa and the relative rate constant of the reaction is plotted as the ordinate. The term "relative rate constant of the reaction" as used herein means a relative value based upon the rate constant of the reaction of a musty odor substance in the absence of an added substance being defined as 1. As a result, a relative rate constant of reaction larger than 1 means that the decomposition of a musty odor substance is accelerated by the added substance. As shown in Fig. 3, the reaction rate of 2-MIB is increased by the addition of the EDTA complexes, with the acceleration effects being about 1.3 times with the addition of EDTA-Fe at a concentration of $5 \times 10^{-6}$ mol/l, about 8.6 times with EDTA-Na at $1 \times 10^{-6}$ mol/l, about 13 times with EDTA-Ca at $1.7 \times 10^{-6}$ mol/l and about 20 times with EDTA-Mg at $1 \times 10^{-7}$ mol/l.

EXAMPLE 2

In this example, the effects of the addition of EDTA complexes on the decomposition of geosmin were examined. Using the technique as described in Example 1, a standard solution of a commercial preparation of geosmin (Geosmin Standard manufactured by WAKO PURE CHEMICAL INDUSTRIES, LTD.) dissolved in purified water was added to an appropriate volume of phosphate buffer (pH 7) to an initial concentration of approximately 30 µg/l. This was followed by the addition of an EDTA complex within the concentration range of $10^{-7}$ to $10^{-5}$ mol/l. Again, the effects of the four EDTA complexes used in Example 1 were compared. The effects of the addition of the EDTA complexes on the decomposition of geosmin are shown in Fig. 4.

In Fig. 4, the concentration of EDTA complex is plotted as the abscissa and the relative rate constant of the reaction as the ordinate. As the results show in Fig. 4, the reaction rate of geosmin is increased by the addition of small amounts of EDTA complexes, with the acceleration effects being about 5 times with the addition of EDTA-Fe at a concentration of $5 \times 10^{-6}$ mol/l, about 29 times with EDTA-Na at $3 \times 10^{-6}$ mol/l, about 43 times with EDTA-Ca at $3 \times 10^{-6}$ mol/l and about 33 times with EDTA-Mg at $7 \times 10^{-6}$ mol/l.

EXAMPLE 3

In this example, the effects of the addition of EDTA complexes to the supply source of city water were examined. Main water qualities of the samples collected from the surface water layers at Lake Sagami and the Edo River are shown in Table 1. In the table, rate constants of reactions of musty odor substances are shown by defining their corresponding values in the absence of the EDTA complex as 1.

Table 1

| Site of sample collection | Lake Sagami | Edo River |
|---|---|---|
| Pretreatment | none | coagulating sedimentation |
| pH | 6.9 | 7.5 |
| TOC* (mg/l) | 3.2 | 1.5 |
| Total carbon concentration (mg $CO_2$/l) | 31.0 | 30.0 |
| Water temp. for testing (°C) | 10 | 20 |
| Rate constant of reaction (l/hr) | | |
| Geosmin | 5.9 | 23.9 |
| 2-MIB | — | 17.9 |

* TOC means total organic carbon.

The same standard geosmin solution as used in Example 2 was added to a surface water layer sample collected at Lake Sagami to an initial concentration of approximately 30 mg/ml. This was followed by the addition of EDTA-Na in the range of $8 \times 10^{-8}$ mol/l to $8 \times 10^{-5}$ mol/l. The effects of the addition of EDTA-Na are shown in Fig. 5.

In Fig. 5, the concentration of EDTA-Na is plotted as the abscissa and the relative rate constant of reaction as the ordinate. As the results show in Fig. 5, the reaction rate of geosmin is increased by the addition of EDTA-Na, with the acceleration effect being about 4.4 times with the addition of the EDTA complex at a concentration of $4 \times 10^{-6}$ mol/l.

The same standard 2-MIB solution as used in Example 1 and the same standard geosmin solution as used in Example 2 were added to a surface water layer sample collected at the Edo River, each to an initial concentration of approximately 300 ng/ml. This was followed by the addition of an EDTA complex in the range of $1 \times 10^{-7}$ mol/l to $3 \times 10^{-5}$ mol/l. Three EDTA complexes, EDTA-Na, EDTA-Ca and EDTA-Mg, were compared for their effects. The effects of the addition of these EDTA complexes are shown in Fig. 6.

In Fig. 6, the concentration of each EDTA complex is plotted as the abscissa and the relative rate constant of reaction as the ordinate. As the results show in Fig. 6, the reaction rates of geosmin and 2-MIB are increased by the addition of these EDTA complexes, with the acceleration effects being about 4 times with the addition of each of these EDTA complexes at a concentration of $5 \times 10^{-6}$ mol/l to $1 \times 10^{-5}$ mol/l.

EXAMPLE 4

In this example, the effects of the addition of a citrate complex to purified water were examined. The same standard solutions of geosmin and 2-MIB as used in Examples 1 and 2 were added to the phosphate buffer (pH 7) used in Examples 1 and 2, each to an initial concentration of approximately 300 ng/ml. This was followed by the addition of iron citrate in the range of from about 0.005 mg/l to 47 mg/l. The effects of the addition of iron citrate are shown in Fig. 7.

In Fig. 7, the concentration of iron citrate is plotted as the abscissa and the relative rate constant of reaction as the ordinate. As the results show in Fig. 7, the reaction rates of geosmin and 2-MIB are increased by the addition of iron citrate, with the acceleration effect being about 5 to 6 times with the addition of the iron citrate at a concentration of about 47 mg/l.

As exemplified above, in the process of the present invention, trace amounts of organic substances such as musty odor substances are decomposed efficiently by the action of the hydroxy radical (OH•) which is formed efficiently through a chain reaction that comprises a hydroxy radical (OH•) formation reaction by a chelate compound and ozone and a hydroperoxy radical ($HO_2$•) formation reaction by a chelate compound and hydroxy radical (OH•). This process overcomes the problems of the aforementioned prior art process disclosed in JP-A-59-186695, as it can treat any type of water without limitation and it does not require pH adjustment of water to be treated. In other words, the process of the present invention has the advantage that it can be carried out with no pre-treatment and no after-treatment.

Though the effects of the process of the present invention have been exemplified only in the case of service water, the same effects, as well as acceleration of the reduction of COD, BOD, for example, can be obtained when the inventive process is applied to the treatment of sewage. COD and BOD mean chemical oxygen demand and biochemical oxygen demand, respectively. The targets to be decomposed by the inventive process are trace amounts of organic substances including musty odor substances.

Since qualities of raw water may sometimes exert influence on the effects of the addition of a metal chelate compound, it is necessary to select effective concentration of the chelate compound. In addition, a chelate compound should be added to raw water prior to the ozone treatment. Raw water should not contain residual oxidants at the time of the addition of a chelate compound, and oxidation, adsorption and the like treatments should not be employed between addition of the chelate compound and the ozone treatment.

As has been described in the foregoing, according to the process of the present invention, a metal chelate compound introduction apparatus is arranged with an ozone treatment system. The chelate compound is injected into the water to be treated, thereby making possible the accelerated decomposition of trace amounts of unspecified organic substances such as musty odor substances and the like contained in service water and COD- and BOD-related substances and the like contained in sewage. As a result, the inventive process can minimize the size of the necessary reaction tank and thus can reduce the area for the facility site.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto.

## Claims

**1.** A process for treating water containing trace amounts of organic substances with ozone, comprising the steps of

- adding a metal chelate compound to said water;
- diffusing ozone into said water, and
- oxidizing and decomposing said organic substances in the presence of the chelate compound and ozone.

**2.** The process according to claim 1, wherein said water is introduced into a reaction tank before the metal chelate compound is injected therein.

**3.** The process according to claim 1, wherein the metal chelate compound is injected into said water before the water is introduced into a reaction tank.

**4.** The process according to any of claims 1 to 3, wherein the metal chelate compound is added to said water in a concentration of $10^{-7}$ to $10^{-4}$ mol/l based on the concentration of the organic substances of $10^{-9}$ to 1 g/l.

**5.** The process according to any of claims 1 to 4, wherein the chelating agent in said metal chelate compound is selected from ethylene diamine tetraacetic acid and citric acid.

**6.** The process according to any of claims 1 to 5, wherein the metal in said metal chelate compound is selected from sodium, calcium, magnesium and iron.

## Patentansprüche

**1.** Verfahren zur Behandlung von Wasser, welches Spurenmengen von organischen Substanzen enthält, mit Ozon, wobei das Verfahren die Schritte umfaßt des

- Hinzufügens einer Metallchelatverbindung zu dem Wasser,
- Diffundierens von Ozon in das Wasser und das
- Oxidieren und der Abbau der organischen Substanzen in Gegenwart von der Chelatverbindung und dem Ozon.

**2.** Verfahren nach Anspruch 1, wobei das Wasser in einen Reaktionstank eingeleitet wird, bevor die Metallchelatverbindung darein injiziert wird.

**3.** Verfahren nach Anspruch 1, wobei die Metallchelatverbindung in das Wasser injiziert wird, bevor das Wasser in einen Reaktionstank eingeleitet wird.

4. Verfahren nach einem der Ansprüche 1 bis 3, wobei die Metallchelatverbindung dem Wasser in einer Konzentration von $10^{-7}$ bis $10^{-4}$ Mol/l auf Basis einer Konzentration der organischen Substanzen von $10^{-9}$ bis 1 g/l hinzugefügt wird.

5. Verfahren nach einem der Ansprüche 1 bis 4, wobei der Chelatbildner in der Metallchelatverbindung aus Ethylendiamintetraessigsäure und Zitronensäure ausgewählt wird.

6. Verfahren nach einem der Ansprüche 1 bis 5, wobei das Metall in der Metallchelatverbindung aus Natrium, Calcium, Magnesium und Eisen ausgewählt wird.

**Revendications**

1. Procédé de traitement d'eau contenant des quantités en trace de substances organiques avec de l'ozone, comprenant les étapes consistant

- à ajouter un composé de chélate de métal à ladite eau;
- à faire diffuser de l'ozone dans ladite eau, et
- à oxyder et à décomposer lesdites substances organiques en la présence du composé de chélate et d'ozone.

2. Procédé selon la revendication 1, dans lequel ladite eau est introduite dans un réservoir de réaction avant que le composé de chélate de métal soit injecté dans celui-ci.

3. Procédé selon la revendication 1, dans lequel le composé de chélate de métal est injecté dans ladite eau avant que l'eau soit introduite dans un réservoir de réaction.

4. Procédé selon l'une quelconque des revendications 1 à 3, dans lequel le composé de chélate de métal est ajouté à ladite eau dans une concentration de $10^{-7}$ à $10^{-4}$ mol/l rapportées à la concentration des substances organiques de $10^{-9}$ à 1g/l.

5. Procédé selon l'une quelconque des revendications 1 à 4, dans lequel l'agent chelatant dans ledit composé de chélate de métal est choisi parmi l'acide éthylènediamino-tétraacétique et l'acide citrique.

6. Procédé selon l'une quelconque des revendications 1 à 5, dans lequel le métal dans ledit composé de chélate de métal est choisi parmi le sodium, le calcium, le magnésium et le fer.

Fig. 1

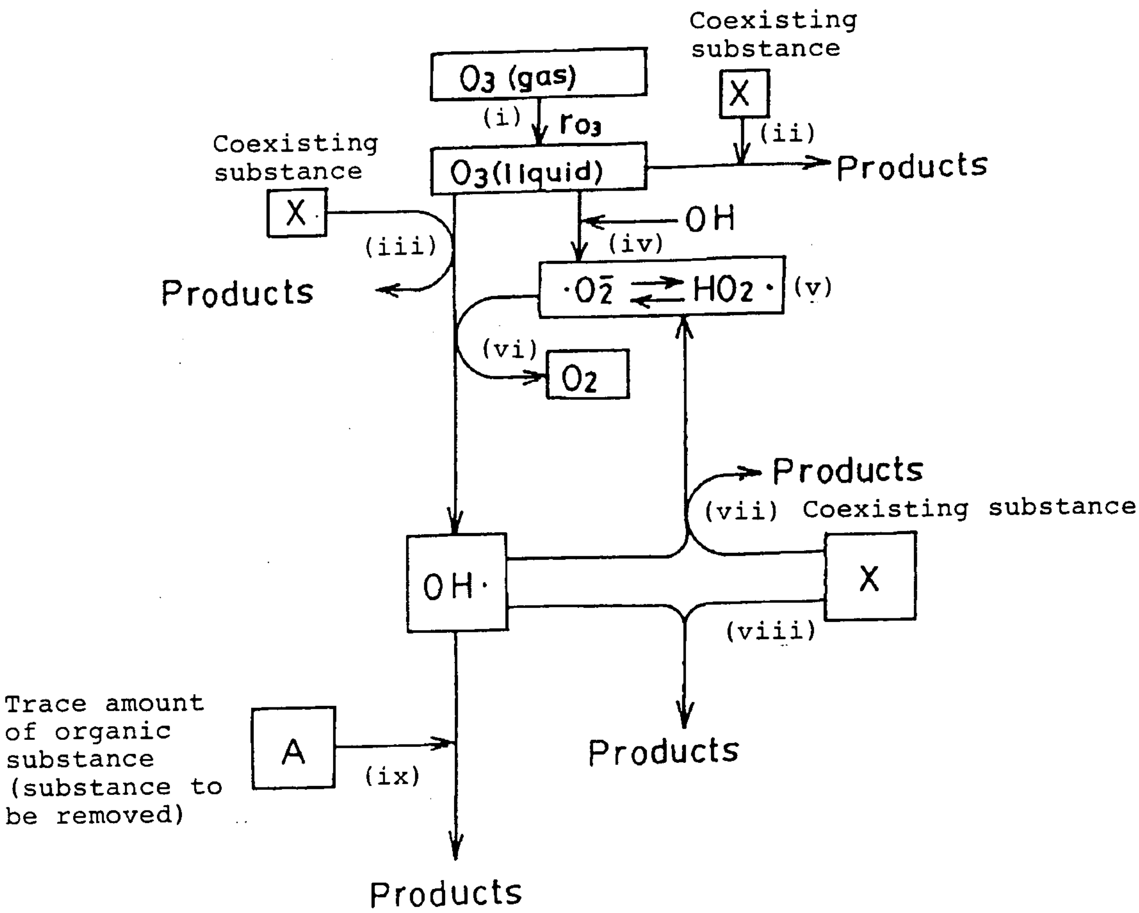
Coexisting substance
O3 (gas)
(i)
ro3
(ii)
X
Products
Coexisting substance
O3(liquid)
X
OH
(iii)
(iv)
Products
·O2̄ ⇄ HO2·
(v)
(vi)
O2
Products
(vii)
Coexisting substance
OH·
X
(viii)
Trace amount of organic substance (substance to be removed)
A
(ix)
Products
Products

Fig. 2

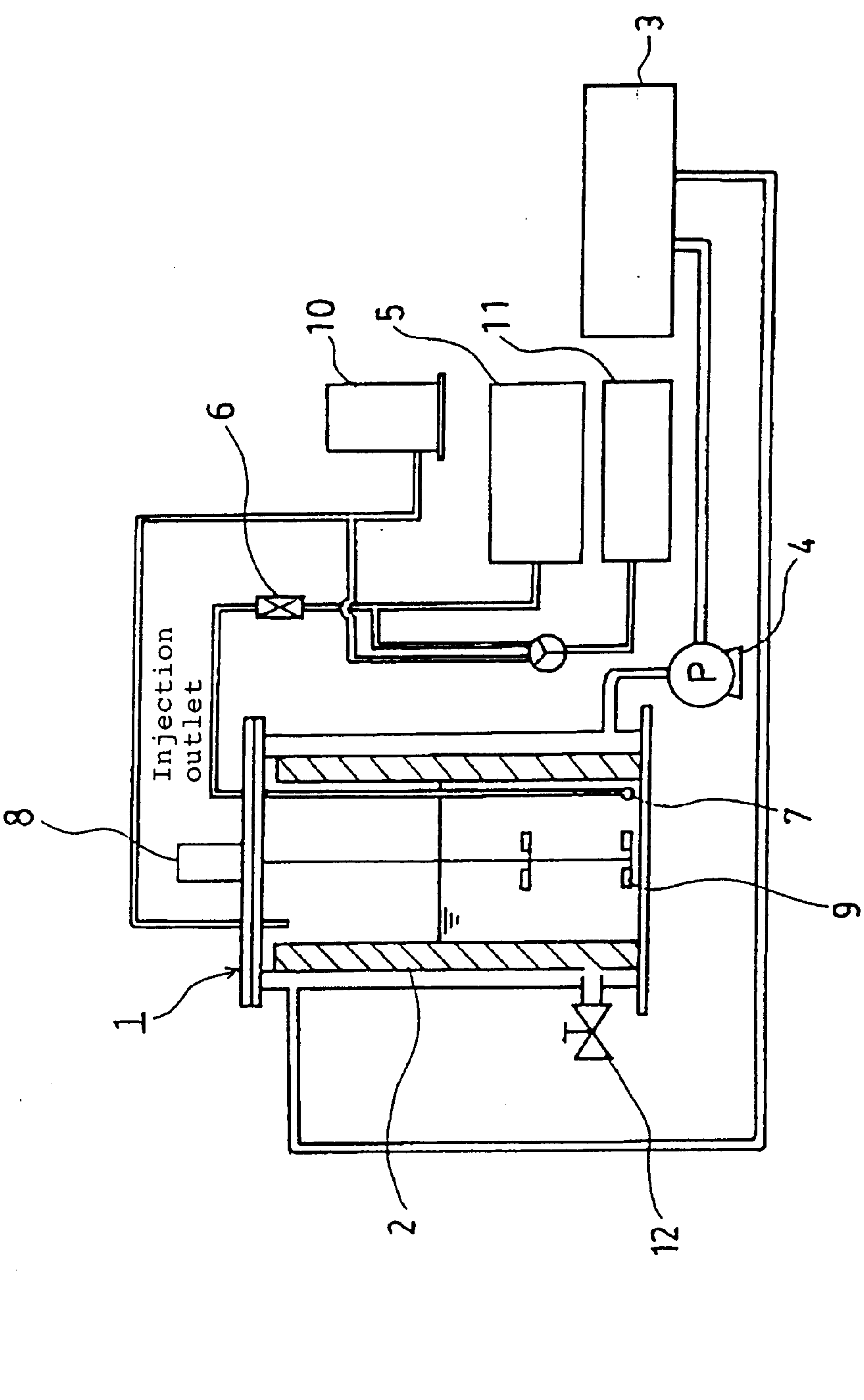

Fig. 3

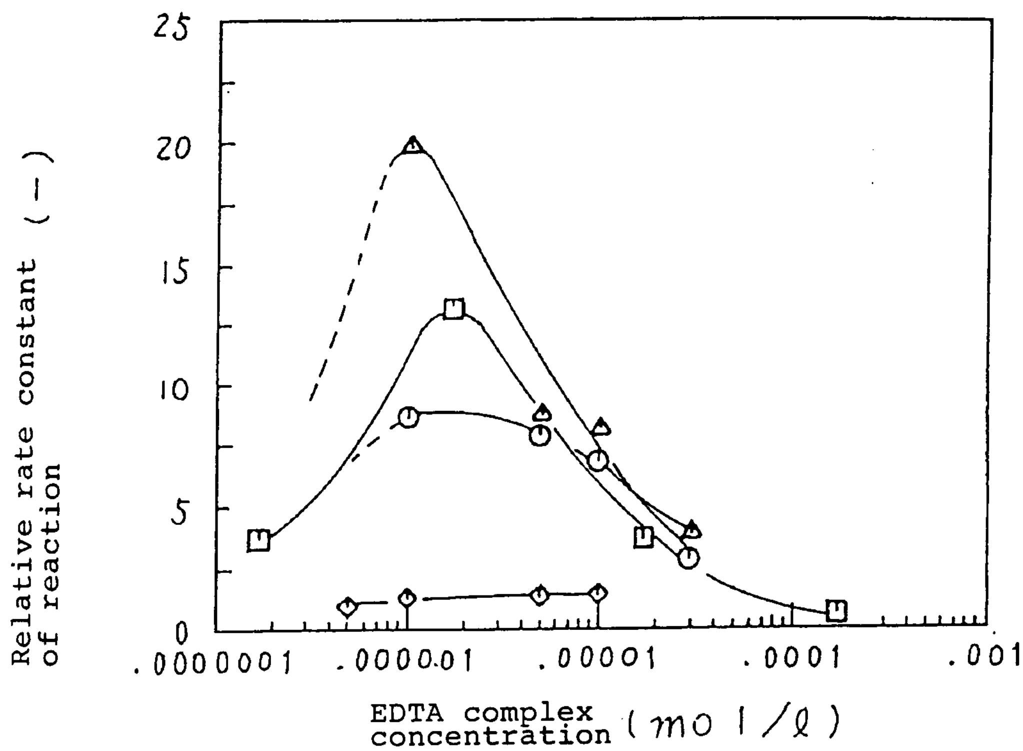
25
20
15
10
5
0
Relative rate constant of reaction ( - )
.0000001
.000001
.00001
.0001
.001
EDTA complex concentration (mol/ℓ)

Fig. 4

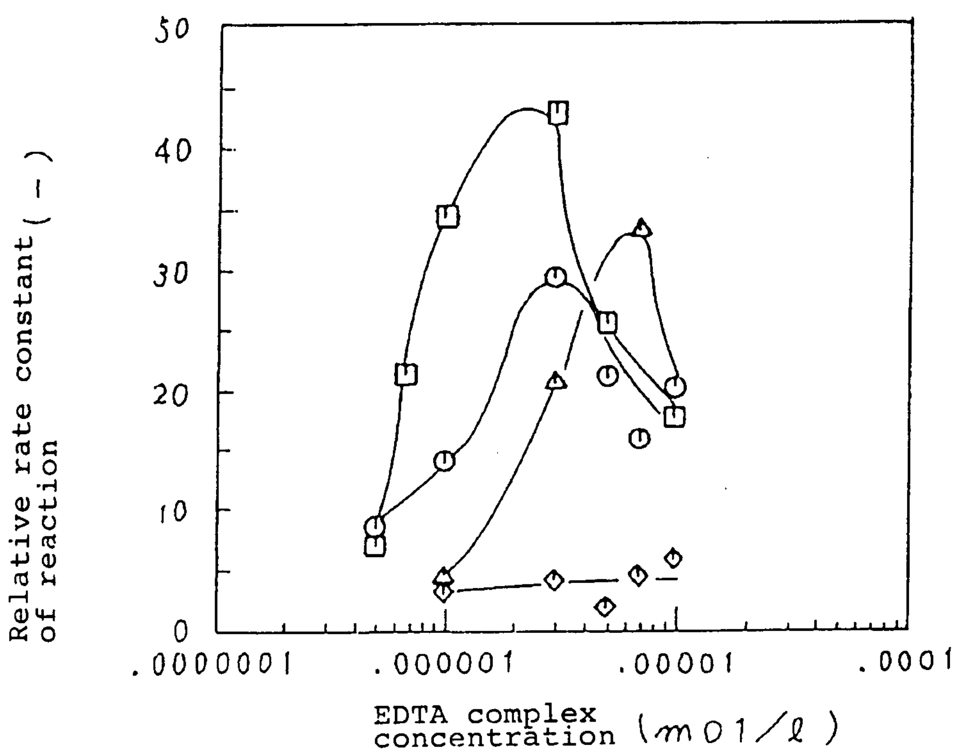
50
40
30
20
10
0
Relative rate constant of reaction ( - )
.0000001
.000001
.00001
.0001
EDTA complex concentration (mol/ℓ)

Fig. 5

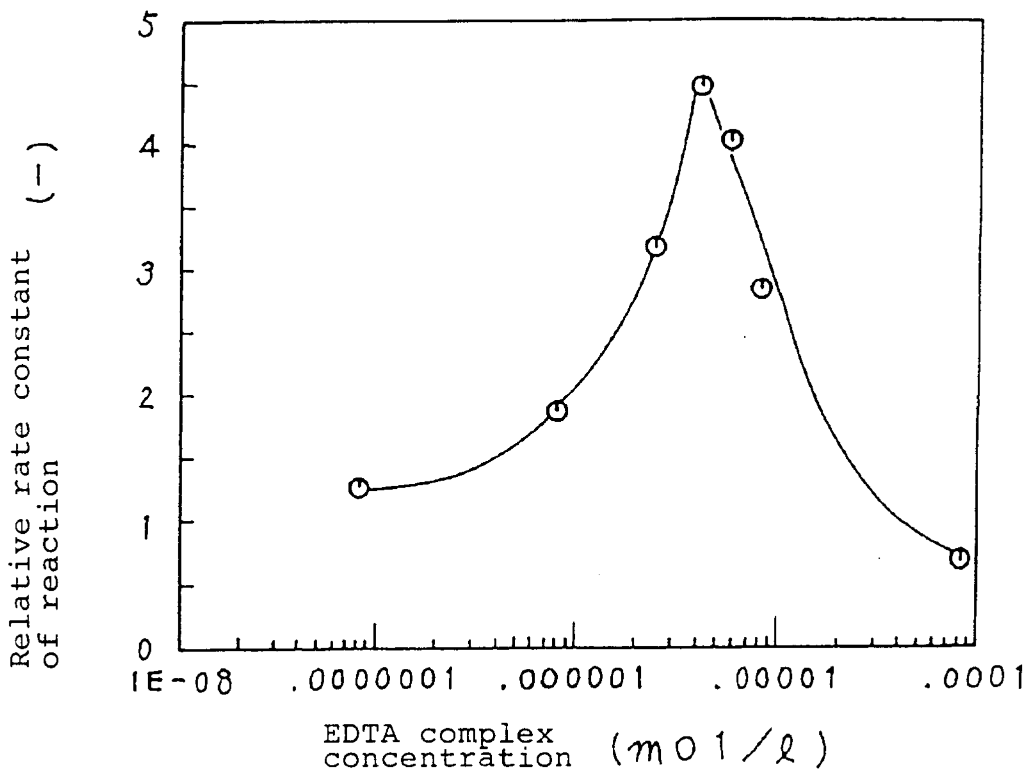
5
4
3
2
1
0
Relative rate constant of reaction (−)
1E-08
.0000001
.000001
.00001
.0001
EDTA complex concentration (mol/ℓ)

Fig. 6

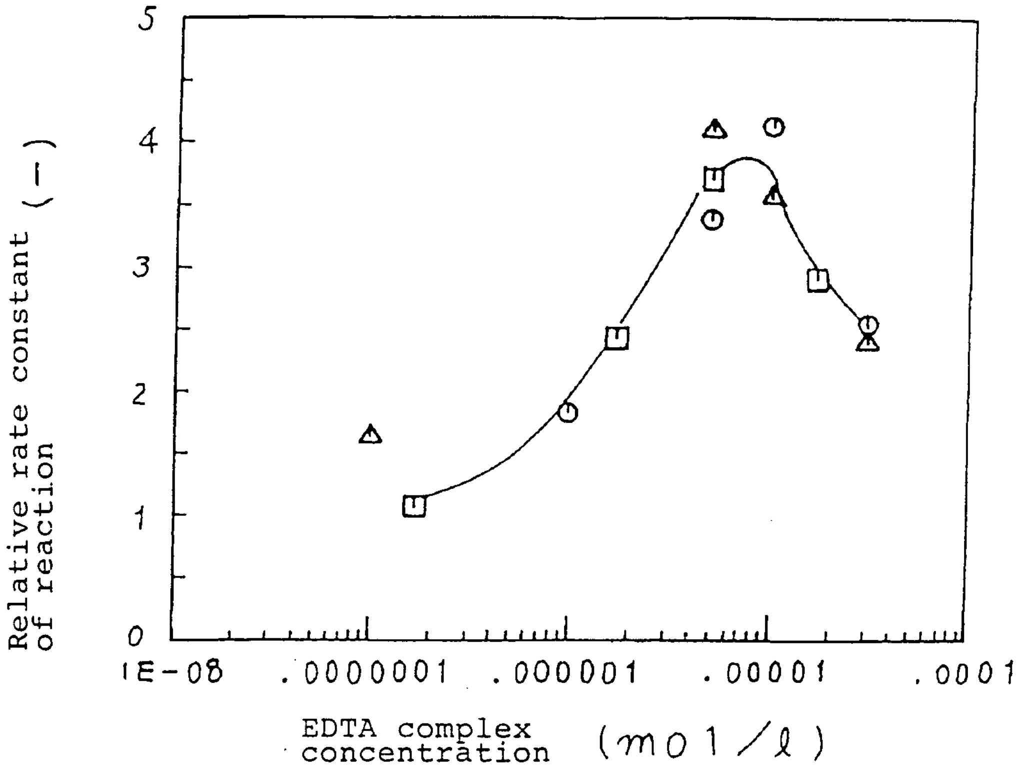
5
4
3
2
1
0
Relative rate constant of reaction (−)
1E-08
.0000001
.000001
.00001
.0001
EDTA complex concentration (mol/ℓ)

Fig. 7

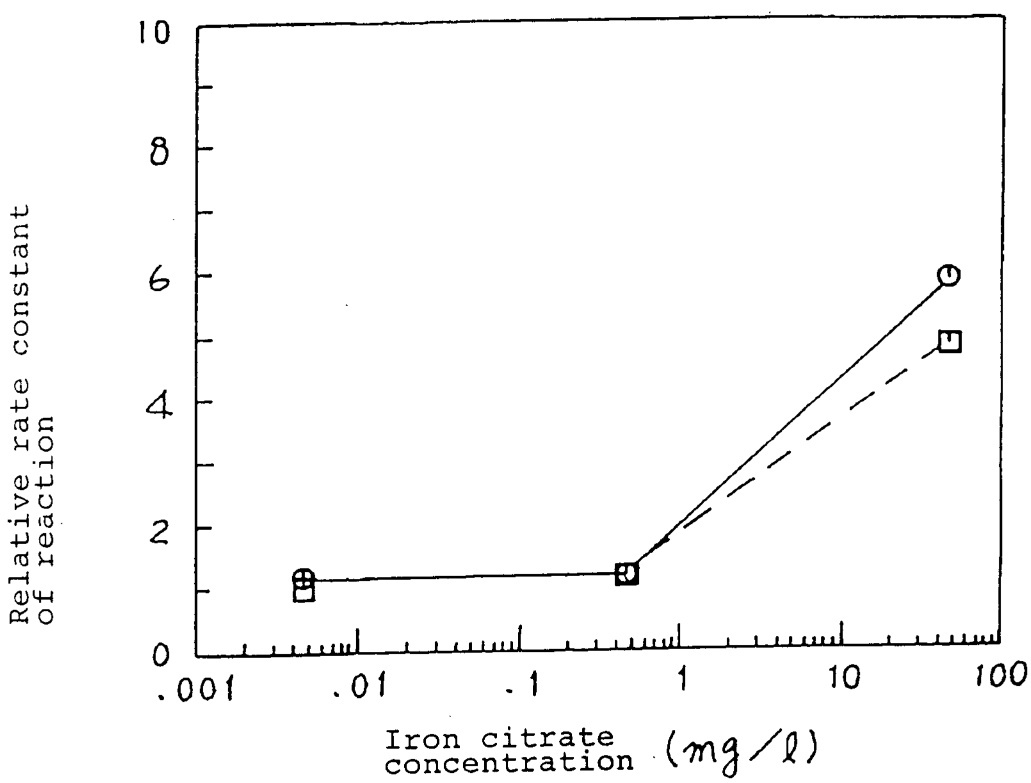
10
8
6
4
2
0
Relative rate constant of reaction
.001
.01
.1
1
10
100
Iron citrate concentration (mg/l)